# EUROPEAN PATENT APPLICATION

(11) **EP 3 232 395 A1**
(43) Date of publication of application: **18.10.2017**
(21) Application number: 15867943.1
(22) Date of filing: 10.09.2015
(51) Int. Cl.: G06Q 50/10, G06F 3/048, G06F 13/00, G06F 17/30

(54) **INFORMATION PROCESSING DEVICE, CONTROL METHOD, AND PROGRAM**

(30) Priority: 09.12.2014 JP 2014248568
(71) Applicant: Sony Corporation, Tokyo 108-0075 (JP)
(72) Inventor: MATSUYAMA, Shinako, Tokyo 108-0075 (JP)
(74) Representative: MFG Patentanwälte Meyer-Wildhagen Meggle-Freund Gerhard PartG mbB
(86) International application number: PCT/JP2015/075698
(87) International publication number: WO 2016/092924

(57) **Abstract**

[Object] To provide an information processing apparatus, a control method, and a program capable of presenting information that a user seems to want at an appropriate timing by responding to unusual behavior on the basis of behavior information of the user.

[Solution] An information processing apparatus including: a behavior analysis unit configured to analyze a behavior pattern in a predetermined time period on the basis of accumulated behavior information; a generation unit configured to, in a case where a behavior different from the behavior pattern is detected, generate a response to the different behavior; and a determination unit configured to determine an output timing of the generated response.

## Description

### Technical Field

The present disclosure relates to an information processing apparatus, a control method, and a program.

### Background Art

In recent years, there has been proposed a dialog system for automatically responding to an utterance of a user by recognizing voice and performing semantic analysis. Such a dialog system only returns necessary information in response to the utterance, and there is no added value that the user thinks that he/she wants to continuously use the dialog system.

In contrast, Patent Literature 1 below proposes a system for selecting optimal content for a current user, the content being suitable for a taste of the user or a peculiarity of the user's operation, in a content distribution service of music data or video data. By selecting content such as music on the basis of the taste of the user, a selection result is caused to be unexpected.

### Citation List

### Patent Literature

- Patent Literature 1:: JP 2008-97313A

### Disclosure of Invention

### Technical Problem

However, in the system disclosed in Patent Literature 1, it is not considered that behavior of the user is detected and a response based on a characteristic of the behavior is automatically made. Further, the system disclosed in Patent Literature 1 only returns a selection result when utterance is performed by the user and does not automatically provide information.

Further, there are provided various services for providing information at a time other than when utterance is performed by the user. However, unless useful information is presented at an appropriate timing, the information bothers and annoys the user. For example, even in a case where, based on a keyword searched once, information such as an advertisement or a recommended store is frequently presented thereafter, the information is useless unless the user can go to the store at a presented time or date, which is unnecessary for the user.

Therefore, a system that presents information that the user seems to want at an appropriate timing even when the user does not perform utterance is highly convenient for a user. For example, it can be said that, in a case where a user who goes to a coffee shop every morning as a daily routine visits an usual place on a trip, a business trip, or the like and a place of a coffee shop in the vicinity of the place is automatically presented in the morning, useful information for the user is presented at an appropriate timing. Further, although a thoughtful or sympathizing word or information is unnecessary when the user behaves similarly everyday, a thoughtful or sympathizing word and information showing how that day is different from usual days, such as "You must be exhausted today.", "It was a good workout.", or "Calorie consumption today is ○○○ calories greater than daily calorie consumption.", is information that the user wants on a day on which the user unusually walks a lot.

As described above, information that the user seems to want or an appropriate timing at which the information is presented can be determined in accordance with behavior of the user.

The present disclosure then proposes an information processing apparatus, a control method, and a program capable of presenting information that a user seems to want at an appropriate timing by responding to unusual behavior on the basis of behavior information of the user.

### Solution to Problem

According to the present disclosure, there is proposed an information processing apparatus including: a behavior analysis unit configured to analyze a behavior pattern in a predetermined time period on the basis of accumulated behavior information; a generation unit configured to, in a case where a behavior different from the behavior pattern is detected, generate a response to the different behavior; and a determination unit configured to determine an output timing of the generated response.

According to the present disclosure, there is proposed a control method including: analyzing a behavior pattern in a predetermined time period on the basis of accumulated behavior information; generating, in a case where a behavior different from the behavior pattern is detected, a response to the different behavior; and determining an output timing of the generated response.

According to the present disclosure, there is proposed a program for causing a computer to function as a behavior analysis unit configured to analyze a behavior pattern in a predetermined time period on the basis of accumulated behavior information, a generation unit configured to, in a case where a behavior different from the behavior pattern is detected, generate a response to the different behavior, and a determination unit configured to determine an output timing of the generated response.

### Advantageous Effects of Invention

As described above, according to the present disclosure, it is possible to present information that a user seems to want at an appropriate timing by responding to an unusual behavior on the basis of behavior information of the user.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a view for explaining an outline of an information processing system according to an embodiment of the present disclosure.
[FIG. 2] FIG. 2 is a block diagram showing an example of a configuration of a user terminal according to the present embodiment.
[FIG. 3] FIG. 3 is a block diagram showing an example of a configuration of a server according to the present embodiment.
[FIG. 4] FIG. 4 is a flowchart showing habit analysis processing according to the present embodiment.
[FIG. 5] FIG. 5 is a flowchart showing response processing according to the present embodiment.
[FIG. 6] FIG. 6 is a flowchart showing response accumulation processing according to the present embodiment.
[FIG. 7] FIG. 7 is a flowchart showing re-response processing according to the present embodiment.
[FIG. 8] FIG. 8 shows a response display example obtained in a case of smart eyeglasses according to the present embodiment.
[FIG. 9] FIG. 9 shows a response display example obtained in a case of a smartphone according to the present embodiment.
[FIG. 10] FIG. 10 shows a response display example in a room according to the present embodiment.
[FIG. 11] FIG. 11 shows a response display example where a plurality of user terminals according to the present embodiment are linked.
[FIG. 12] FIG. 12 shows a character appearance example based on a message according to the present embodiment.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Further, description will be provided in the following order.
1. Outline of information processing system according to embodiment of present disclosure
2. Configuration
   2-1. Configuration of user terminal
   2-2. Configuration of server
3. Operation processing
   3-1. Habit analysis processing
   3-2. Response processing
   3-3. Response accumulation processing and re-response processing
4. Response presentation example
5. Conclusion

### <<1. Outline of information processing system according to embodiment of present disclosure>>

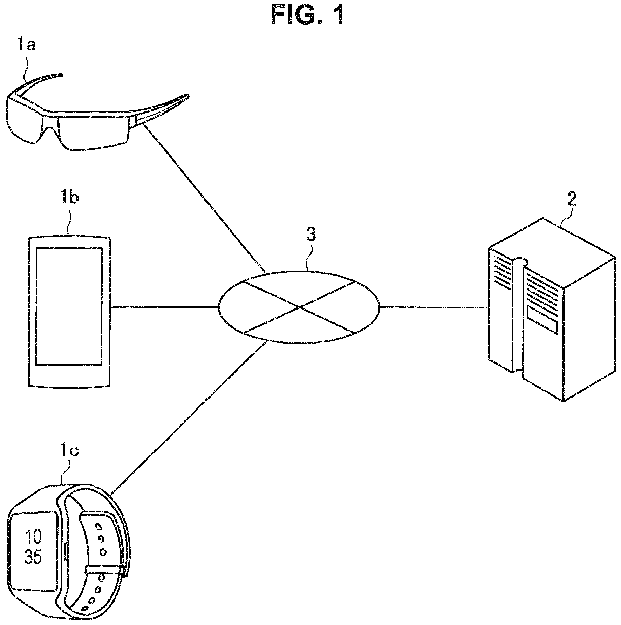

An outline of an information processing system according to an embodiment of the present disclosure will be described with reference to FIG. 1. As shown in FIG. 1, the information processing system according to the present embodiment includes a user terminal 1 possessed by a user and a server 2 for controlling generation of a response and a presentation timing. The user terminal 1 and the server 2 are connected via, for example, a network 3.

As shown in FIG. 1, the user terminal 1 is realized by, for example, smart eyeglasses 1a, a smartphone 1b, or a smartwatch 1c. The user terminal 1 continuously senses behavior information of the user and transmits the detected behavior information to the server 2 via the network 3. Specifically, for example, a global positioning system (GPS), an acceleration sensor, and a geomagnetic sensor are mounted in the user terminal 1, and position information and motion information (amount of activity) are sensed.

The server 2 accumulates behavior information transmitted from the user terminal 1 and analyzes a behavior pattern of the user on the basis of the behavior information. Further, in a case where behavior of the user is different from the behavior pattern, i.e., unusual behavior is detected, the server 2 automatically generates a response with respect to the different behavior and presents the response to the user via the user terminal 1. Further, the server 2 can control a presentation timing of the response in accordance with content of the response. For example, in a case where information is information based on position information such as information on a store existing in the vicinity of a current place of the user, the server 2 performs control so that the information is immediately presented, and, in a case where information is information based on an amount of activity (the number of steps, a running distance, a standing time, or the like) of the user, the server 2 performs control so that the information is presented after the user is back to home, e.g., when the user finishes daily activity. Further, the server 2 can also perform control so that the information is presented at a predetermined timing in accordance with a behavior or behavior pattern (habit) of the user.

With this, in a case where the user usually performs similar behavior, similar information is continuously presented, which is not interesting. However, by automatically generating a response on the basis of unusual behavior and controlling a response timing, it is possible to present information that the user seems to want at an appropriate timing.

Hereinabove, the outline of the information processing system according to the embodiment of the present disclosure has been described. Note that the user terminal 1 is not limited to the form shown in FIG. 1 and may be, for example, a tablet terminal, a mobile phone terminal, a personal digital assistant (PDA), a personal computer (PC), a portable music player, a portable game console, or a wearable terminal (head-mounted display (HMD) or smartband). Further, in the example shown in FIG. 1, the user terminal 1 has both a function of sensing behavior of the user and a function of presenting a response in accordance with control by the server 2. However, the sensing function and the presentation function may be performed by different information processing terminals, or the sensing function may be provided in a plurality of information processing terminals.

Configurations of the user terminal 1 and the server 2 included in the information processing system of the present embodiment will be described.

### <<2. Configuration>>

### <2-1. Configuration of user terminal>

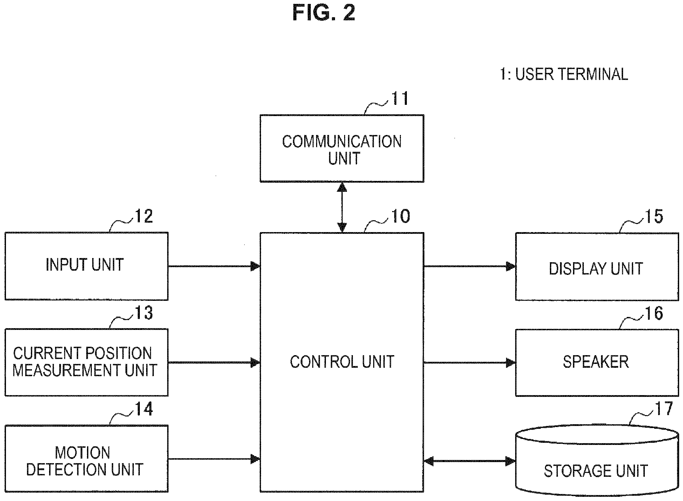

FIG. 2 is a block diagram showing an example of the configuration of the user terminal 1 according to the present embodiment. As shown in FIG. 2, the user terminal 1 includes a control unit 10, a communication unit 11, an input unit 12, a current position measurement unit 13, a motion detection unit 14, a display unit 15, a speaker 16, and a storage unit 17.

### (Control unit 10)

The control unit 10 is configured by, for example, a microcomputer including a central processing unit (CPU), a read only memory (ROM), a random access memory (RAM), a nonvolatile memory, and an interface unit and controls each configuration of the user terminal 1. Specifically, the control unit 10 according to the present embodiment performs control so that current position information measured by the current position measurement unit 13 and motion information (i.e., amount-of-activity information) detected by the motion detection unit 14 are transmitted from the communication unit 11 to the server 2. Note that the control unit 10 may perform control so that the current position information and the motion information are transmitted in real time. Further, the control unit 10 performs control so that a response transmitted from the server 2 via the communication unit 11 is output from the display unit 15 or the speaker 16.

### (Communication unit 11)

The communication unit 11 is connected to an external device via a wireless network/wired network and has a function of transmitting/receiving data. The communication unit 11 according to the present embodiment is connected to, for example, the server 2 and transmits the current position information and the motion information in accordance with control by the control unit 10 and receives a response generated in the server 2.

### (Input unit 12)

The input unit 12 detects information input operation by the user and transmits the detected input information to the control unit 10. For example, the input unit 12 is realized by a touchscreen, a keyboard, a ten-key pad, a button, a switch, or the like. Further, when the input unit 12 is realized by a camera, it is possible to perform gesture input. Further, when the input unit 12 is realized by a microphone, it is possible to perform voice input. Further, the input unit 12 may also be realized by a plurality of kinds of input devices.

### (Current position measurement unit 13)

The current position measurement unit 13 has a function of detecting a current position of the user terminal 1 on the basis of a signal acquired from the outside. Specifically, for example, the current position measurement unit 13 is realized by a GPS positioning unit and receives an electric wave from a GPS satellite, detects a position at which the user terminal 1 exists, and outputs the detected position information to the control unit 10. Further, the current position measurement unit 13 may detect a position via not only a GPS but also, for example, a Wi-Fi (registered trademark), transmission to/reception from a mobile phone, a PHS, a smartphone, or the like, or short-range communication.

### (Motion detection unit 14)

The motion detection unit 14 has a function of detecting motion of the user terminal 1. Specifically, for example, the motion detection unit 14 is realized by a triaxial acceleration sensor, a geomagnetic sensor, and the like and detects the amount of activity of the user (a stopping time, a walking time, the number of steps, a running time, a sitting time, a standing time, a time for which the user rides in a vehicle) by using data detected by those sensors. The motion detection unit 14 outputs the detected motion information to the control unit 10.

### (Display unit 15)

The display unit 15 has a function of displaying letters, images, other information on a screen in accordance with an instruction from the control unit 10.

### (Speaker 16)

The speaker 16 has a function of reproducing a voice signal in accordance with an instruction from the control unit 10.

### (Storage unit 17)

The storage unit 17 stores various kinds of data and stores, for example, a program for executing each processing of the control unit 10. Further, the storage unit 17 may store schedule information of the user.

Hereinabove, the configuration of the user terminal 1 according to the present embodiment has been specifically described. Note that the configuration of the user terminal 1 is not limited to the example shown in FIG. 2 and may be, for example, a configuration that does not include the speaker 16. Further, the user terminal 1 may have a configuration such that the current position measurement unit 13 and the motion detection unit 14 are separately provided and current position information and motion information are acquired from the separated current position measurement unit 13 and motion detection unit 14 via short-range wireless communication (for example, infrared communication, Wi-Fi (registered trademark), or Bluetooth (registered trademark)).

### <2-2. Configuration of server>

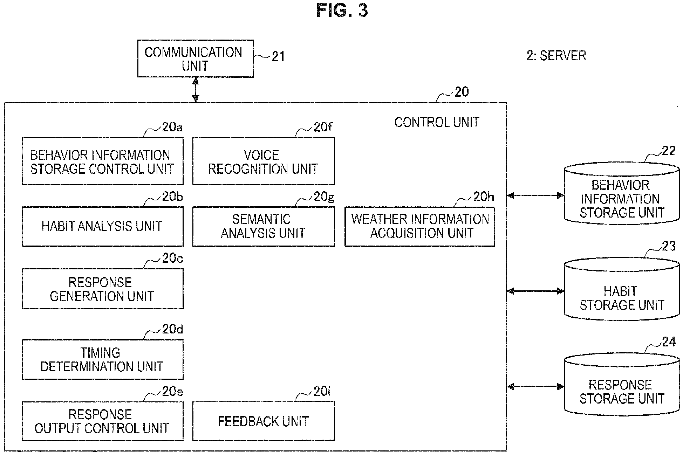

FIG. 3 is a block diagram showing an example of a configuration of the server 2 according to the present embodiment. As shown in FIG. 3, the server 2 includes a control unit 20, a communication unit 21, a behavior information storage unit 22, a habit storage unit 23, and a response storage unit 24.

### (Control unit 20)

The control unit 20 is configured by, for example, a microcomputer including a CPU, a ROM, a RAM, a nonvolatile memory, and an interface unit and controls each configuration of the server 2. Specifically, as shown in FIG. 3, the control unit 20 according to the present embodiment functions as a behavior information storage control unit 20a, a habit analysis unit 20b, a response generation unit 20c, a timing determination unit 20d, a response output control unit 20e, a voice recognition unit 20f, a semantic analysis unit 20g, a weather information acquisition unit 20h, and a feedback unit 20i.

The behavior information storage control unit 20a stores current position information, motion information, and the like transmitted from the user terminal 1 via the communication unit 21 as behavior information in the behavior information storage unit 22. The motion information is amount-of-activity information showing the number of steps, a walking time, a running time, a riding time in a vehicle, a standing time, a sitting time, or the like.

The habit analysis unit 20b analyzes a behavior pattern, i.e., a habit of the user on the basis of the behavior information stored on the behavior information storage unit 22. Specifically, the habit analysis unit 20b analyzes a habit of the user on the basis of behavior information for a predetermined time period. For example, the habit analysis unit 20b extracts a category of a visiting place (restaurant, convenience store, bookstore, or the like) on the basis of behavior information for the past N month(s) and detects a category or name of a store visited many times as a place where the user usually goes. The large number of visits may be determined on the basis of the number of visits the user has made in each category or may be determined by comparing the number of visits with statistics of other users. Further, the habit analysis unit 20b also extracts a date/time at which a visiting place visited many times is visited and can therefore detect a place where the user usually goes in weekday mornings or at weekday nights, in weekend mornings or at weekend nights, or the like. Further, the habit analysis unit 20b may analyze the usual number of steps (on weekdays, on weekends), a time or place at which the user usually rides in a train (rate of standing/sitting), or the like on the basis of the behavior information for the past N month(s). Furthermore, the habit analysis unit 20b can also detect a habit of a time at which the user goes to work, a time at which the user returns to the company, a time at which the user is back to home, or the like by analyzing an average or dispersion of the time at which the user goes to work, the time at which the user returns to the company, the time at which the user is back to home, or the like on the basis of behavior information for the past week. Habit information analyzed by the habit analysis unit 20b is stored on the habit storage unit 23.

The response generation unit 20c generates a response to the behavior information of the user received from the user terminal 1 via the communication unit 21. Specifically, in a case where a habit of the user stored on the habit storage unit 23 is referred to and behavior different from the habit is detected, the response generation unit 20c generates a response to the different behavior. For example, in a case where it is found that the user visits a place where the user does not usually visits on the basis of position information, the response generation unit 20c generates a hail such as "Did you have fun?" or "Did you do something different from usual?". Further, based on the user's habit of going to a coffee shop every morning, the response generation unit 20c generates information (place information) on a coffee shop belonging to the same category or a coffee shop of the same name existing in the vicinity of the place in a case where the user visits a place where the user does not usually visit. Note that, in a case where the user visits a place where the user does not usually visit, the response generation unit 20c may generate information (place information) on, for example, a restaurant that the user prefers and exists in the vicinity of the place on the basis of taste information of the user, instead of the habit of the user.

Further, in a case where it is found that the amount of activity is larger/smaller than usual on the basis of a habit regarding the amount of activity and motion information (the number of steps, a walking time, a standing time, or the like), the response generation unit 20c generates a hail such as "It was a good exercise." or "You walked a lot today.". Further, the response generation unit 20c generates information indicating a difference from usual behavior, such as "You took n steps more than usual today." or "Calorie consumption today is more than usual.".

Further, in a case where it is found that the user could not sit in a train in which the user can usually sit on the basis of a habit regarding a life and motion information, the response generation unit 20c generates a thoughtful or sympathizing words such as "It is a pity." or "You must be exhausted today.". Further, in a case where it is found that the user returns to the company or is back to home late more than usual, the response generation unit 20c generates a thoughtful or sympathizing word such as "You worked hard until late. Good job.". Further, in a case where the user returns to the company or is back to home late more than usual for one week, the response generation unit 20c generates a thoughtful or sympathizing word for a predetermined time period, such as "You were busy this week.".

Hereinabove, generation of a response to behavior different from a usual habit has been described. However, generation of a response by the response generation unit 20c according to the present embodiment is not limited thereto. For example, in a case where the user has a habit of moving on foot or by bicycle when, for example, the user goes to work/goes to school, goes shopping, or picks up and drops off his/her child, in a case where weather information acquired by the weather information acquisition unit 20h is special, or in a case where a discomfort index based on weather is higher than a predetermined value, the response generation unit 20c generates a response notifying the user of the weather, advice based on the special weather, or a thoughtful or sympathizing word based on the special weather. Specifically, the response generation unit 20c generates responses such as a sympathizing word, a thoughtful word, a hail, and advice, such as "It got much colder at night. You must be cold because you rode a bicycle.", "It is hot and humid, so please do not forget drinking water.", and "It is snowing. Are you OK?". The weather information acquisition unit 20h acquires information on weather from a predetermined external server and outputs the information to the response generation unit 20c.

Note that determination on whether or not weather is special weather or calculation of a discomfort index can be performed by using general methods. For example, the discomfort index is obtained by calculating Expression 1: 0.81 Td + 0.01 H (0.99 Td - 14.3) + 46.3 by using temperature (Td) and humidity (H). In a case where the discomfort index is 55 or less, the user feels uncomfortable due to coldness, and, in a case where the discomfort index is 85 or more, the user feels uncomfortable due to warmth, and therefore, in such a case, the response generation unit 20c generates a response. Further, the response generation unit 20c may determine special weather such as heavy rain or heavy snow on the basis of a reference determined in each area (for example, heavy rain in a case where an amount of rain is 20 mm or more per hour, or heavy snow in a case where a depth of snowfall for 24 hours is 20 cm).

Further, in a case where the user has a habit of moving by train to go to work/go to school and an unusual situation such as an accident, a delay, or suspension occurs on the basis of railroad information, the response generation unit 20c generates a response notifying the user of the accident or the like, advice, or a thoughtful or sympathizing word.

Further, the response generation unit 20c can also generate a response in accordance with an utterance from the user (inquiry by voice). Specifically, for example, in a case where the user performs utterance in the user terminal 1, voice acquired by the input unit 12 is transmitted to the server 2, and the server 2 converts the voice to letter data by causing the voice recognition unit 20f to perform voice recognition. Then, the semantic analysis unit 20g analyzes meaning of the letter data output from the voice recognition unit 20f. For example, in a case where a character string "How is the weather this weekend?" is output by voice recognition, the semantic analysis unit 20g determines a date of "weekend" on the basis of a current date/time. Further, the semantic analysis unit 20g estimates a place where the user wants to know the weather on the basis of a current position, address, workplace of the user or a place where the user will go in a case where the user has a plan to go to the place during the weekend on the basis of schedule information. With this, the semantic analysis unit 20g can analyze that the character string is an utterance "weather information in ΔΔ (place) on ○ (month), × (date)". Then, the response generation unit 20c generates a response based on an analysis result (meaning of the utterance of the user) output from the semantic analysis unit 20g. For example, in a case of the utterance "weather information in ΔΔ (place) on ○ (month), × (date)", the response generation unit 20c generates a response on the basis of weather information acquired by the weather information acquisition unit 20h. Further, content of the response generated in accordance with the utterance of the user as described above is stored on the response storage unit 24.

Further, in a case where a response that has already been made, which is stored on the response storage unit 24, is changed, the response generation unit 20c may generate a response for notifying the user of such a change. For example, in a case where weather information of a day that is one week from today is returned in response to an utterance from the user and weather forecast is changed several days later, the response generation unit 20c generates a response based on the latest weather information. Hereinabove, generation of a response based on an utterance by the response generation unit 20c has been described. However, the present embodiment is not limited thereto, and it is also possible to generate a response to an inquiry from the user by, for example, inputting letters or using a gesture, instead of voice.

The timing determination unit 20d determines a presentation timing of a response generated in the response generation unit 20c to the user. Specifically, the timing determination unit 20d determines whether the response is immediately presented or is presented at a specified timing (predetermined timing based on a behavior or behavior pattern of the user) such as in the morning, a time at which the user goes out, a time at which the user gets off a vehicle, a time at which the user is back to home, a time before sleep, or on weekends. For example, in a case where the response is information on a place, the timing determination unit 20d may determine a timing so that the response is immediately presented. Specifically, for example, in a case where, when the user visits a place where the user does not usually go, a store belonging to the same category as the store where the user usually goes or a store of the same name as the store where the user usually goes exists in the vicinity of the place, the timing is determined so that information on the store is immediately presented. Further, the timing determination unit 20d may determine, on the basis of a habit, that information is presented in the morning in a case where a store belongs to the same category as a store where the user usually goes in the morning, and information is presented at night in a case where a store belongs to the same category as a store where the user usually goes at night.

Further, in a case of a response such as a hail performed in a case where an amount of daily activity is different from usual, the timing determination unit 20d may determine that the response is presented when the user finish a daily activity, i.e., when the user is back to home.

Further, in a case of a response such as a thoughtful or sympathizing word performed when a habit is different from a usual life habit, the timing determination unit 20d may determine that the response is presented at the end of the day, i.e., when the user is back to home or goes to bed. Further, in a case of a response such as a thoughtful or sympathizing word performed when a state of the user when the user rides in a vehicle is different from usual, the timing determination unit 20d may determine that the response is presented when the user gets off the vehicle.

Further, in a case of a response or advice notifying the user of special weather, a railroad accident, or the like, the timing determination unit 20d may determine that the response or advice is presented before the user departs, and, in a case of a thoughtful or sympathizing word based on the special weather, the railroad accident, or the like, the response or advice is presented when the user is back to home.

Further, the timing determination unit 20d determines that a response generated in response to an utterance from the user is immediately presented.

Further, in a case of a response for notifying the user of a change generated by the response generation unit 20c when a response that has already been made is changed, the timing determination unit 20d may determine that the response is immediately presented when the change occurs or may determine that the user is notified of the response when the user stays home after the user is back to home.

The response output control unit 20e performs control so that a response generated by the response generation unit 20c is presented to the user via the user terminal 1 at a timing determined by the timing determination unit 20d. For example, the response output control unit 20e transmits a response to the user terminal 1 and instructs the user terminal 1 to present the response at the timing determined by the timing determination unit 20d. Alternatively, the response output control unit 20e may transmit the response from the communication unit 21 to the user terminal 1 and also transmit an instruction of a presentation timing of the response. In the user terminal 1, for example, a response is output from the speaker 16 or the display unit 15 (voice output, display output).

Furthermore, the response output control unit 20e can also control an output form of a response in accordance with a device type of the user terminal 1. For example, in a case where the user terminal 1 is a device having a comparatively small display region, such as a smartband or a smartwatch, the response output control unit 20e performs control so that a granularity of information is low, i.e., an outline of the response is presented. Meanwhile, in a case where the user terminal 1 is a device having a comparatively large display region, such as a smartphone or a tablet terminal, the response output control unit 20e performs control so that the granularity of the information is higher, i.e., detailed information of the response is presented. Further, the response output control unit 20e may perform control so that the response is presented at different granularities on a plurality of devices. For example, the outline is displayed on the smartband or the smartwatch and the detailed information is displayed on the smartphone or the tablet terminal.

The feedback unit 20i can realize generation of a more appropriate response, determination of a more appropriate timing, and more appropriate accumulation of habit information by reflecting behavior of the user with respect to an automatically generated response as feedback in the response generation unit 20c, the timing determination unit 20d, or the habit storage unit 23. Further, the feedback unit 20i may reflect, as taste information, a matter that the user answers that he/she likes the matter in a taste information storage unit (not shown) included in the server 2.

### (Communication unit 21)

The communication unit 21 is connected to an external device via a wireless network/wired network and has a function of transmitting/receiving data. The communication unit 21 according to the present embodiment is connected to, for example, the user terminal 1 and receives behavior information of the user and transmits response information to the user terminal 1 in accordance with control by the response output control unit 20e.

### (Behavior information storage unit 22)

The behavior information storage unit 22 stores behavior information (position information, motion information, and the like) of the user transmitted from the user terminal 1.

### (Habit storage unit 23)

The habit storage unit 23 stores habit information (behavior pattern) of the user analyzed by the habit analysis unit 20b.

### (Response storage unit 24)

The response storage unit 24 stores a response to an utterance from the user generated by the response generation unit 20c.

Hereinabove, the configuration of the server 2 according to the present embodiment has been specifically described. Note that the configuration of the server 2 is not limited to the example shown in FIG. 3, and, for example, the behavior information storage unit 22, the habit storage unit 23, and the response storage unit 24 may be provided in an external server.

### <<3. Operation processing>>

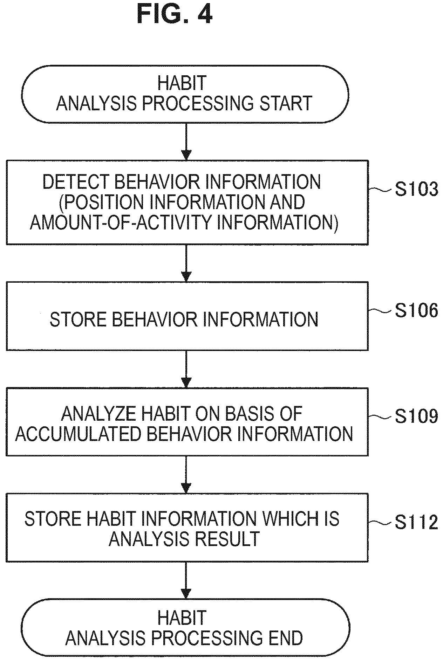

Operation processing of the information processing system according to the present embodiment will be specifically described with reference to FIG. 4 to FIG. 7.

### <3-1. Habit analysis processing>

FIG. 4 is a flowchart showing habit analysis processing according to the present embodiment. As shown in FIG. 4, first, in Step S103, the user terminal 1 detects behavior information of the user. As described above, the behavior information of the user contain position information obtained by the current position measurement unit 13 and motion information obtained by the motion detection unit 14. Further, the user terminal 1 transmits the detected behavior information of the user to the server 2. Transmission of the behavior information can be continuously performed in real time.

Then, in Step S106, the behavior information storage control unit 20a of the server 2 stores behavior information transmitted from the user terminal 1 on the behavior information storage unit 22.

Then, in Step S109, the habit analysis unit 20b of the server 2 analyzes a habit (i.e., behavior pattern) on the basis of the behavior information accumulated in the behavior information storage unit 22. For example, the habit analysis unit 20b analyzes a behavior pattern for each time period on weekdays/weekends on the basis of behavior information for the past one month or one week.

Then, in Step S112, the habit storage unit 23 of the server 2 stores habit information (for example, information in which a place and a matter are associated with a time axis) which is an analysis result obtained by the habit analysis unit 20b.

### <3-2. Response processing>

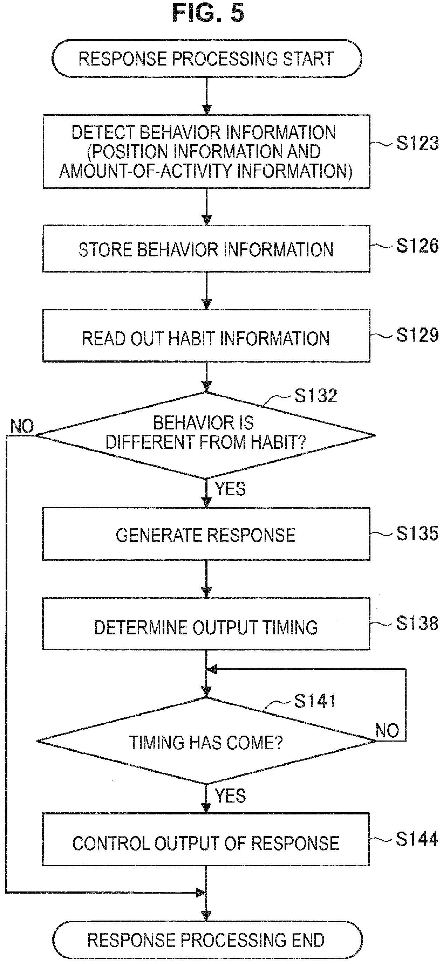

FIG. 5 is a flowchart showing response processing according to the present embodiment. As shown in FIG. 5, first, in Step S123, the user terminal 1 detects behavior information of the user and transmits the behavior information to the server 2.

Then, in Step S126, the behavior information storage control unit 20a of the server 2 stores the behavior information transmitted from the user terminal 1 on the behavior information storage unit 22.

Then, in Step S129, the response generation unit 20c of the server 2 reads out habit information of the user from the habit storage unit 23.

Then, in Step S132, the response generation unit 20c determines whether or not behavior of the user is different from a habit by comparing the behavior information of the user transmitted from the user terminal 1 with the habit information read out from the habit storage unit 23. Specifically, for example, the response generation unit 20c determines whether or not the user exists in a place different from a place where the user usually goes and whether or not motion (amount of activity) of the user is different from usual.

Then, in a case where the behavior is different from the habit ("Yes" in Step S132), the response generation unit 20c generates a response to the different behavior in Step S135. In this case, the response generation unit 20c may generate information on a store belonging to the same category as a store where the user usually goes with the use of the habit information read out from the habit storage unit 23 as necessary. Further, for example, in a case where the amount of activity is larger than usual, in a case where the user cannot sit in a train in which the user can usually sit, in a case where the user is back to home later than usual, the response generation unit 20c may generate a hail or a thoughtful/sympathizing word as a response.

Then, in Step S138, the timing determination unit 20d determines an output timing of the response generated in the response generation unit 20c to the user.

Then, when the determined timing has come ("Yes" in S141), the response output control unit 20e performs control so that the response is output from the user terminal 1 to the user in Step S144. Output of the response can be performed by voice output or display output.

### <3-3. Response accumulation processing and re-response processing>

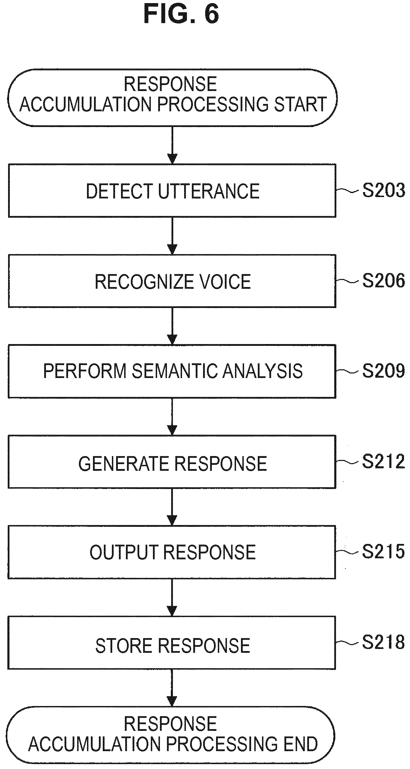

FIG. 6 is a flowchart showing response accumulation processing according to the present embodiment. As shown in FIG. 6, first, in Step S203, an utterance (voice input) from the user is detected by the input unit 12 of the user terminal 1 and is transmitted to the server 2.

Then, in Step S206, the voice recognition unit 20f of the server 2 recognizes the voice transmitted from the user terminal 1 and converts the voice to letter data.

Then, in Step S209, the semantic analysis unit 20g extracts meaning of the letter data (content of the utterance) to which the voice is converted by the voice recognition unit 20f.

Then, in Step S212, the response generation unit 20c generates a response to the meaning of the utterance from the user, i.e., the content of the utterance extracted by the semantic analysis unit 20g. For example, in a case where the utterance from the user is an utterance regarding weather information, the response generation unit 20c generates, as a response, weather information at a date/time and place extracted by the semantic analysis unit 20g.

Then, in Step S215, the response output control unit 20e performs control so that the response generated by the response generation unit 20c is output from the user terminal 1 to the user.

Then, in Step S218, the control unit 20 stores the content of the response on the response storage unit 24. In this case, in a case where the content of the response is content of a response that may be changed in the future, such as future weather information, the control unit 20 adds additional information such as "A response needs to be made when weather is changed until ○ (date)." to the response and stores the response on the response storage unit 24.

Note that, in a case where the utterance from the user is an utterance regarding a preference of the user, the control unit 20 may store the utterance as taste information of the user on a taste information storage unit (not shown) included in the server 2 or may reflect the utterance in the habit storage unit 23 as a habit. For example, in a case of an utterance regarding a preference, such as "I have a good time going to the coffee shop every morning.", the control unit 20 can reflect the utterance in the habit storage unit 23 as a habit.

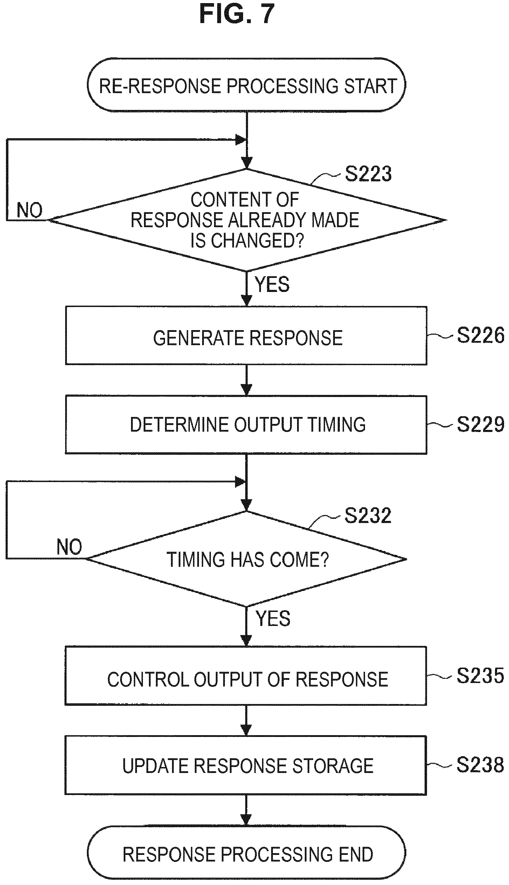

FIG. 7 is a flowchart showing re-response processing according to the present embodiment. As described above with reference to FIG. 6, a response made once is stored on the response storage unit 24, and therefore, in a case where content of the response is changed thereafter, the server 2 can make a response again.

Specifically, first, in Step S223, the response generation unit 20c determines whether or not the content of the response stored on the response storage unit 24 has been changed. For example, in a case where, after a response regarding weather information on weekends is made, the weather information is changed before the weekends, the response generation unit 20c determines that the content of the response has been changed.

Then, in a case where the content of the response has been changed ("Yes" in S223), the response generation unit 20c generates a new response in Step S226.

Then, in Step S229, the timing determination unit 20d determines an output timing of the response generated again.

Then, when the determined timing has come ("Yes" in S232), the response output control unit 20e performs control so that the response generated by the response generation unit 20c again is output from the user terminal 1 to the user in Step S229.

Then, in Step S232, the control unit 20 updates the response information stored on the response storage unit 24.

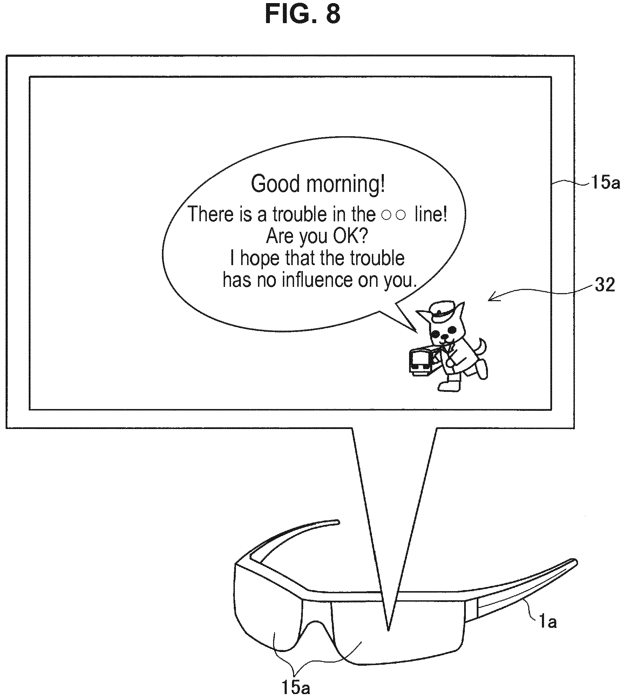

Hereinabove, the operation processing according to the present embodiment has been specifically described. Then, presentation examples of a response according to the present embodiment will be described. Presentation of a response in the user terminal 1 according to the present embodiment may be performed by voice output from the speaker 16 or may be performed by display output from the display unit 15. Hereinafter, specific examples of a response display screen obtained in a case of display output will be described with reference to FIG. 8 to FIG. 12.

### <<4. Response presentation example>>

FIG. 8 shows a response display example obtained in a case of the smart eyeglasses 1a. As shown in FIG. 8, in a case where the user terminal 1 is realized by the smart eyeglasses 1a, a lens portion positioning in front of eyes of the user when the user wears the smart eyeglasses 1a corresponds to the display unit 15a. The display unit 15a has transmittance, and therefore the user can view an image displayed on the display unit 15a while visually recognizing a real space via the display unit 15a.

As shown in FIG. 8, the smart eyeglasses 1a display a response image 32 at an end of the display unit 15a on the basis of response data transmitted from the server 2 so as not to obstruct a field of view of the user. In a case where the user has a habit of moving by train when the user goes to work/goes to school, the response image 32 presents occurrence of a railroad accident ("Good morning! There is a trouble in the ○○ line!") and a thoughtful/sympathizing word ("Are you OK? I hope that the trouble has no influence on you.") at a timing before departure. Further, the response image 32 shown in FIG. 8 may include a character and show the character as if the character utters a response. The character can be changed in accordance with a preference of the user.

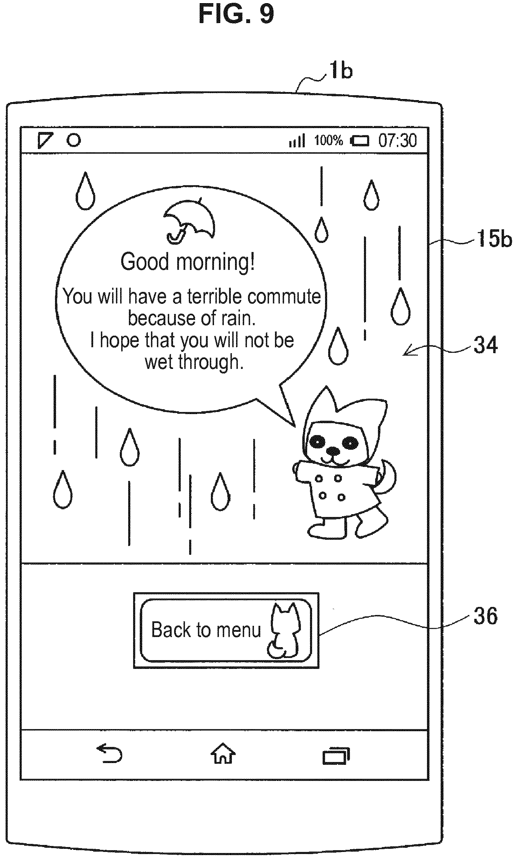

FIG. 9 shows a response display example obtained in a case of the smartphone 1b. As shown in FIG. 9, in a case where the user terminal 1 is realized by the smartphone 1b, the smartphone 1b displays a response image 34 on the display unit 15b on the basis of the response data transmitted from the server 2. Further, a return button 36 may also be displayed.

In a case where the user has a habit of moving on foot or by bicycle when the user goes to work/goes to school, the response image 34 presents a thoughtful/sympathizing word based on raining ("Good morning! You will have a terrible commute because of rain. I hope that you will not be wet through.") at a timing before departure. Further, the response image 34 shown in FIG. 9 may include a character and show the character as if the character utters a response. The character can be changed in accordance with a preference of the user.

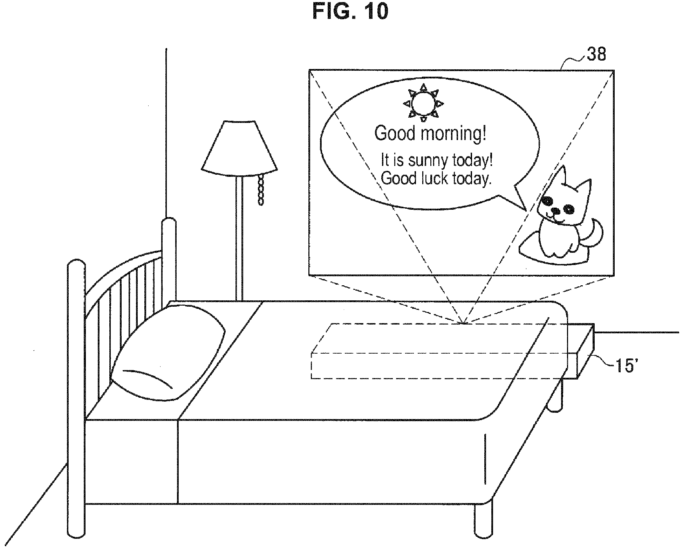

FIG. 10 shows a response display example in a room. In the above embodiment, a case where a response image is displayed on the display unit 15 of the user terminal 1 has been described. However, the present embodiment is not limited thereto, and a display recessed into a wall or ceiling in the room or a projector 15' for projecting an image onto the wall or ceiling in the room may be used as an example of an output unit. In the example shown in FIG. 10, a state in which a response image 38 is projected by the projector 15' onto the wall of the room is shown. In a case where, for example, the user terminal 1 is realized by the smartphone 1b, the projector 15' can be connected to the smartphone 1b via a wireless network such as Wi-Fi (registered trademark) or Bluetooth (registered trademark) and function as the output unit of the smartphone 1b.

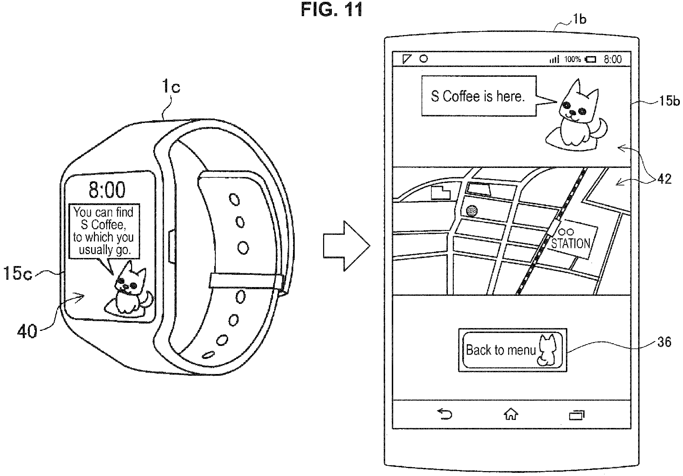

FIG. 11 shows a response display example where a plurality of user terminals 1 are linked. For example, in a case where the user wears the smartwatch 1c (or smartband or the like) on his/her arm and possesses the smartphone 1b in his/her bag or pocket, the server 2 may perform control so that response data is displayed at a granularity based on each of the plurality of devices. Alternatively, in a case where the smartphone 1b and the smartwatch 1c are linked via a wireless network connection such as Wi-Fi (registered trademark) or Bluetooth (registered trademark), the smartphone 1b may perform control so that a granularity of response data transmitted from the server 2 is adjusted and an outline of a response is displayed on a display unit 15c of the smartwatch 1c. The display unit 15c of the smartwatch 1c has a comparatively small display region, whereas the display unit 15b of the smartphone 1b has a comparatively large display region, and therefore it is possible to realize appropriate display forms in accordance with the devices by displaying the outline of the response on the smartwatch 1c and displaying details of the response on the smartphone 1b.

With this, as shown in FIG. 11, the user can check the outline of the response on the display unit 15c of the smartwatch 1c with the use of a response image 40 and can check detailed information displayed on the display unit 15b of the smartphone 1b with the use of a response image 42.

In a case where the user visits a place different from a place where the user usually goes, the response image 40 and the response image 42 present, in the morning, information on a coffee shop existing in the vicinity of the place on the basis of a habit of usually going to a coffee shop every morning. The response image 40 is displayed on the display unit 15c of the smartwatch 1c having a comparatively small display region, and therefore only presence/absence of existence of a coffee shop, such as "You can find S Coffee, to which you usually go.", is shown. Meanwhile, the response image 42 is displayed on the display unit 15b of the smartphone 1b having a comparatively large display region, and therefore it is possible to show detailed information such as a map image indicating a place of the coffee shop and business hours of the store.

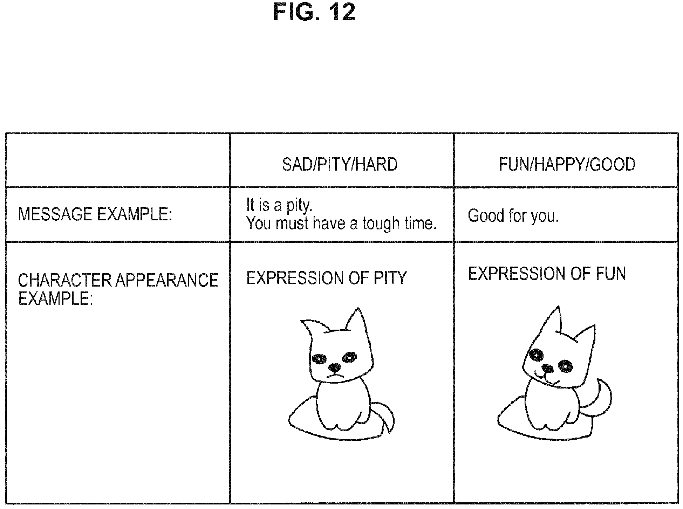

Note that, in the above each response presentation example, a message and a character are displayed. However, it is also possible to change an expression of the character in accordance with content of the message. FIG. 12 shows a character appearance example based on the message. As shown in FIG. 12, for example, in a case where a word such as "sad", "pity", or "hard" is included in the message, a appearance of the character is changed to an expression of pity, and, in a case where a word such as "fun", "happy", or "good" is included therein, the appearance of the character is changed to an expression of fun. As described above, it is possible to increase a healing or thoughtful effect by changing the appearance of the character to an expression showing a feeling (joy, sadness, anger, resignation, surprise, dislike, fear, or the like) based on a message.

### <<5. Conclusion>>

As described above, the information processing system according to the embodiment of the present disclosure can present information that a user seems to want at an appropriate timing by making a response to unusual behavior on the basis of behavior information of the user.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, it is also possible to prepare a computer program for causing hardware such as a CPU, a ROM, and a RAM included in the user terminal 1 and the server 2 described above to exert functions of the user terminal 1 and the server 2. Further, a computer readable storage medium in which the computer program is stored is also provided.

Further, as shown in FIG. 1, the information processing system according to the present embodiment has been described as a configuration including the user terminal 1 and the server 2. However, the present embodiment is not limited thereto, and the information processing system may realized by the user terminal 1. That is, the configuration of the server 2 shown in FIG. 3 is included in the user terminal 1, and therefore the user terminal 1 can generate a response to unusual behavior on the basis of behavior information of the user and present the response.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing apparatus including:
   a behavior analysis unit configured to analyze a behavior pattern in a predetermined time period on the basis of accumulated behavior information;
   a generation unit configured to, in a case where a behavior different from the behavior pattern is detected, generate a response to the different behavior; and
   a determination unit configured to determine an output timing of the generated response.
(2) The information processing apparatus according to (1),
   wherein the generation unit generates place information to be presented to a user with respect to the different behavior on the basis of the behavior pattern or taste information of the user.
(3) The information processing apparatus according to (1) or (2),
   wherein the generation unit generates a hail with respect to the different behavior.
(4) The information processing apparatus according to any one of (1) to (3),
   wherein the generation unit generates a sympathizing or thoughtful comment with respect to the different behavior.
(5) The information processing apparatus according to any one of (1) to (4),
   wherein the generation unit generates advice, a notification, a hail, or a sympathizing or thoughtful comment based on special weather.
(6) The information processing apparatus according to any one of (1) to (5),
   wherein the behavior information is position information or motion information of a user.
(7) The information processing apparatus according to (6),
   wherein the motion information is amount-of-activity information indicating a number of steps, a walking time, a running time, a riding time in a vehicle, a standing time, or a sitting time.
(8) The information processing apparatus according to any one of (1) to (7),
   wherein, in the case where the different behavior is detected, the determination unit determines an output timing so that the response to the different behavior is immediately output.
(9) The information processing apparatus according to any one of (1) to (8),
   wherein the determination unit determines that the response to the different behavior is made at a predetermined timing based on a behavior or behavior pattern of a user.
(10) The information processing apparatus according to any one of (1) to (9),
   wherein the response is made by voice output or display output.
(11) The information processing apparatus according to any one of (1) to (10),
   wherein the response is output at an information granularity corresponding to a size of a display region of an output device.
(12) The information processing apparatus according to any one of (1) to (11), further including:
   a response storage unit configured to store a response made with respect to an inquiry from a user,
   wherein, in a case where content of the stored response is changed, the generation unit generates a response again.
(13) A control method including:
   analyzing a behavior pattern in a predetermined time period on the basis of accumulated behavior information;
   generating, in a case where a behavior different from the behavior pattern is detected, a response to the different behavior; and
   determining an output timing of the generated response.
(14) A program for causing a computer to function as
   a behavior analysis unit configured to analyze a behavior pattern in a predetermined time period on the basis of accumulated behavior information,
   a generation unit configured to, in a case where a behavior different from the behavior pattern is detected, generate a response to the different behavior, and
   a determination unit configured to determine an output timing of the generated response.

### Reference Signs List

- 1: user terminal
- 10: control unit
- 11: communication unit
- 12: input unit
- 13: current position measurement unit
- 14: motion detection unit
- 15: display unit
- 16: speaker
- 17: storage unit
- 2: server
- 20: control unit
- 20a: behavior information storage control unit
- 20b: habit analysis unit
- 20c: response generation unit
- 20d: timing determination unit
- 20e: response output control unit
- 20f: voice recognition unit
- 20g: semantic analysis unit
- 20h: weather information acquisition unit
- 20i: feedback unit
- 21: communication unit
- 22: behavior information storage unit
- 23: habit storage unit
- 24: response storage unit

## Claims

1. An information processing apparatus comprising:
a behavior analysis unit configured to analyze a behavior pattern in a predetermined time period on the basis of accumulated behavior information;
a generation unit configured to, in a case where a behavior different from the behavior pattern is detected, generate a response to the different behavior; and
a determination unit configured to determine an output timing of the generated response.

2. The information processing apparatus according to claim 1,
wherein the generation unit generates place information to be presented to a user with respect to the different behavior on the basis of the behavior pattern or taste information of the user.

3. The information processing apparatus according to claim 1,
wherein the generation unit generates a hail with respect to the different behavior.

4. The information processing apparatus according to claim 1,
wherein the generation unit generates a sympathizing or thoughtful comment with respect to the different behavior.

5. The information processing apparatus according to claim 1,
wherein the generation unit generates advice, a notification, a hail, or a sympathizing or thoughtful comment based on special weather.

6. The information processing apparatus according to claim 1,
wherein the behavior information is position information or motion information of a user.

7. The information processing apparatus according to claim 6,
wherein the motion information is amount-of-activity information indicating a number of steps, a walking time, a running time, a riding time in a vehicle, a standing time, or a sitting time.

8. The information processing apparatus according to claim 1,
wherein, in the case where the different behavior is detected, the determination unit determines an output timing so that the response to the different behavior is immediately output.

9. The information processing apparatus according to claim 1,
wherein the determination unit determines that the response to the different behavior is made at a predetermined timing based on a behavior or behavior pattern of a user.

10. The information processing apparatus according to claim 1,
wherein the response is made by voice output or display output.

11. The information processing apparatus according to claim 1,
wherein the response is output at an information granularity corresponding to a size of a display region of an output device.

12. The information processing apparatus according to claim 1, further comprising:
a response storage unit configured to store a response made with respect to an inquiry from a user,
wherein, in a case where content of the stored response is changed, the generation unit generates a response again.

13. A control method comprising:
analyzing a behavior pattern in a predetermined time period on the basis of accumulated behavior information;
generating, in a case where a behavior different from the behavior pattern is detected, a response to the different behavior; and
determining an output timing of the generated response.

14. A program for causing a computer to function as
a behavior analysis unit configured to analyze a behavior pattern in a predetermined time period on the basis of accumulated behavior information,
a generation unit configured to, in a case where a behavior different from the behavior pattern is detected, generate a response to the different behavior, and
a determination unit configured to determine an output timing of the generated response.
